# EUROPÄISCHE PATENTSCHRIFT

(11) **EP 1 134 637 B1**
(45) Veröffentlichungstag und Bekanntmachung des Hinweises auf die Patenterteilung: **04.10.2006**
(21) Anmeldenummer: 01102130.0
(22) Anmeldetag: 01.02.2001
(51) Int. Cl.: G05B 19/418, G05B 19/4097

(54) **Verfahren zum Konstruieren (CAD) und/oder zum Fertigstellen (CAM) und/oder zur Qualitätsüberprüfung (CIM) eines Werkstückes**
Method for constructing (CAD) and/or for producing (CAM) and/or for checking the quality (CIM) of a workpiece
Méthode de construction (CAD) et/ou de fabrication (CAM) et/ou de vérification de qualité (CIM) d'une pièce

(30) Priorität: 15.03.2000 DE 10012437
(43) Veröffentlichungstag der Anmeldung: 19.09.2001
(73) Patentinhaber: Volkswagen Aktiengesellschaft, 38436 Wolfsburg (DE)
(72) Erfinder: Trümper, Jürgen, Dipl.-Ing., 38100 Braunschweig (DE); Kaller, Adolf, 85107 Baar-Ebenhausen (DE); Kiunke, Thomas, 38448 Wolfsburg (DE); Bandel, Clemens, 85049 Ingolstadt (DE); Stemmer, Xaver, 85084 Reichertshafen (DE); Mayer, Christian, 85117 Eitensheim (DE)

(56) Entgegenhaltungen:
- EP-A- 0 740 240
- US-A- 5 552 995
- US-A- 5 757 649
- US-A- 5 815 400

## Beschreibung

Die Erfindung betrifft ein Verfahren zum Konstruieren (CAD) und/oder zum Fertigstellen (CAM) und/oder zur Qualitätsüberprüfung (CIM) eines Werkstückes.

Aus dem Stand der Technik ist bekannt, daß der Austausch von Informationen über die Geometrie eines Werkstückes zwischen einem CAD-Programm (Computer Aided Design - CAD), einem CAM-Programm (Computer Aided Manufacturing - CAM) und/oder eines CIM-Programms (Computer Inspection Masurement - CIM) im wesentlichen mit Hilfe von Zeichnungen bzw. Zeichnungsdateien erfolgt. So wird mit Hilfe eines CAD-Programmes das Werkstück konstruiert, wobei die Fertigungsgeometrie zeichnerisch festgelegt wird. Innerhalb der Zeichnungen werden sämtliche relevanten Maße als alphanumerische Werte eingetragen, so daß bei komplexen Werkstücken mit bspw. über 100 Werkstückelementen die Zeichnungen unübersichtlich werden. Als Werkstückelemente werden dabei bspw. Bohrungen, Kantenformen, oder ausgefräste Abschnitte verstanden. Für eine Fertigung des Werkstückes mit Hilfe eines CAM-Programmes müssen aus den vorliegenden Zeichnungen bzw. Zeichnungsdateien in einem separaten Schritt die Fertigungsparameter herausgelesen werden, um die rechnergesteuerten Werkzeuge so anzusteuern, daß ein automatisches Herstellen des Werkstückes erfolgen kann. In ähnlicher Weise erfolgt die Informationsübertragung an eine rechnergestützte Qualtitätsüberprüfung mit Hilfe eines CIM-Programmes. Aus den Zeichnungsdaten werden die Maße in einem separaten Schritt abgeleitet, die im Rahmen einer Qualitätsüberprüfung nachgemessen und beurteilt werden müssen. Ergeben sich dabei Änderungserfordernisse in Bezug auf die Fertigungsgeometrie des Werkstückes, so müssen diese Änderungen mit Hilfe des CAD-Programmes umgesetzt und zu neuen Zeichnungen verarbeitet werden. Diese dienen dann erneut als Vorlage für eine Einrichtung eines oder mehrerer rechnergesteuerten Werkzeuge für ein Herstellen des Werkstückes, wobei der Schritt des Erstellens der Fertigungsparameter aus den Zeichnungsdaten erfolgen muß.

Es hat sich dabei herausgestellt, dass für die Einrichtung der Fertigungsparameter für das CAM-Programm wie auch für das CIM-Programm aufwendig ist, da ein Benutzer die Daten aus den Zeichnungen ablesen und herausselektieren muss, bevor die Fertigung bzw. die Qualitätsüberprüfung rechnergestützt durchgeführt werden kann.

Das Dokument US 5,757,649 offenbart ein Verfahren zum automatischen Betreiben einer CAD/CAM-Vorrichtung, die mit einer Mehrzahl von Maschinen korrespondiert, wie beispielsweise einer Koordinatenschleifmaschine, einem Bearbeitungszentrum, u.a. Dabei sind beispielsweise Produkt-Grafikdaten in Element-Daten, wie z. B. Linien, Bogen, Punkte, Kreise und Dimensionierungslinien aufgeteilt, wobei die Element-Daten in einer Speichereinheit gespeichert werden. Zur Entnahme der in der Speichereinheit gespeicherten Element-Daten und zur Definition der entnommenen Element-Daten als einer zweidimensionalen Bearbeitungsform ist zudem eine Vielzahl von zweidimensionalen Bearbeitungs-Definitionstabellen vorgesehen. Außerdem ist eine dreidimensionale Bearbeitungs-Definitionstabelle zur Verbindung der Vielzahl von zweidimensionalen Bearbeitungs-Definitionstabellen und zur Definition der ausgewählten zweidimensionalen Bearbeitungs-Definitionstabellen als einer dreidimensionalen Bearbeitungsform vorgesehen. Des Weiteren ist eine Vielzahl von Bearbeitungsbedingungs-Speichereinrichtungen zur Speicherung von Bearbeitungsbedingungen, welche der Mehrzahl von Maschinen entsprechen, vorgesehen.

Die EP 0740240 A2 offenbart eine numerische Steuereinheit zum automatischen maschinellen Bearbeiten eines Werkstücks auf der Basis eines Maschinenprogramms, welche eine Speichereinheit zum Speichern von Eingangs-/Ausgangsdaten zu der NC-Einheit aufweist sowie eine Editiereinheit zum Editieren von in der Speichereinheit gespeicherten Daten, die dazu geeignet ist Daten für einen zukünftigen Bearbeitungsauftrag zu editieren, während die Einheit einen momentanen Bearbeitungsauftrag durchführt.

Die US 5,552,995 offenbart ein computerbasiertes technisches Konstruktionssystem zum Entwerfen eines Teils, ein Werkzeug sowie ein Verfahren zum Herstellen des Teils. Das Konstruktionssystem weist einen Prozessor und eine Speichereinheit auf, wobei die Speichereinheit Merkmalsvorlagen abspeichert und jede Merkmalsvorlage eine Repräsentierung eines primitiven Objekts ist, welches eine Form und eine Funktion aufweist. Jede Merkmalsvorlage ist durch die Funktion des primitiven Objekts bezeichnet und umfasst eine Repräsentierung einer primitiven geometrischen Entität, die die Form des primitiven Objekts aufweist. Jede Merkmalsvorlage kann dabei Informationen hinsichtlich eines Werkzeugs und eines Verfahrens zur Herstellung des primitiven Objekts enthalten.

Der Erfindung liegt daher das technische Problem zugrunde, die gemeinsame Datenschnittstelle einer CAD/CAM-Vorrichtung so zu verbessern, dass zur Erstellung strukturierter und vollständiger CAM-kompatibler Fertigungsinformationen aus den CAD-Infor-mationen möglichst wenige Systemressourcen, insbesondere möglichst wenig Speicherplatz, beansprucht werden.

Der Erfindung liegt außerdem das technische Problem zugrunde, den Datenaustausch zwischen den verschiedenen rechnergestüzten Verfahrensabschnitten einer Prozesskette vom Konstruieren eines Werkstückes über eine Fertigstellung hin zu einer Qualitätsüberprüfung zu vereinfachen.

Erfindungsgemäß ist das zuvor aufgezeigte technische Problem durch ein Verfahren gemäß Anspruch 1 dadurch gelöst, dass das Werkstück zumindest teilweise aus vordefinierten Werkstückelementen aufgebaut wird und dass die für die Charakterisierung der Fertigungsgeometrie der Werkstückelemente notwendigen Fertigungsparameter als alphanumerische Werte eingegeben und verarbeitet werden, wobei für jedes Werkstückelement ein Datensatz entsteht, der anschließend in standardisierter Form in einer Tabelle oder in mehreren Tabellen abgespeichert wird, die Fertigungsparameter die Parameter Name des Werkstückelementes, Bezugselement, Bezugsfläche, Hauptbezugspunkt, Nebenbezugspunkt, Form, Lage, Fertigungstoleranzen und Oberflächenbeschaffenheit umfassen und der Name des Werkstückelementes Informationen über die Bearbeitungsrichtung in Bezug auf ein zugrunde liegendes Koordinatensystem enthält. Die alphanumerischen Werte stellen sämtliche erforderlichen Daten für die Fertigung jedes einzelnen Werkstückelementes dar, so dass aus der gesamten Information aller Fertigungsparameteraller WerKstückelemente eine vollständige Beschreibung der Geometrie des Werkstückes erfolgt. Mit Hilfe der alphanumerischen Werte der Fertigungsparameter lassen sich einerseits mit Hilfe eines CAD-Programmes vollständige Zeichnungen erstellen. Zum anderen kann ein CAM-Programm mit Hilfe der alphanumerischen Werte der Fertigungsparameter den Herstellungsprozess automatisch steuern. Ebenso kann ein CIM-Programm eine Qualitätsüberprüfung rechnerstützt mit Hilfe der alphanumerischen Werte der Fertigungsparameter durchführen. Ein separater Schritt zur Bestimmung der jeweils erforderlichen Parameter aus den Zeichnungen ist nicht mehr erforderlich, sämtliche Programme greifern auf dieselben alphanumerischen Werte zurück, so dass ein Zusammenwirken aller Programme vereinfacht wird. Die Fertigungsparameter sind als alphanumerische Daten in Form einer Tabelle abgespeichert und können bevorzugt in Form einer solchen Tabelle eingelesen werden. Durch eine standardisierte Form wird eine eindeutige Schnittstelle zwischen den verschiedenen Programmen zum Konstruieren, Fertigstellen und Qualitätsüberprüfen gebildet. Selbstverständlich ist es dabei möglich, dass die alphanumerischen Daten eine Schnittstelle zwischen jeweils nur einem Paar von Programmen darstellt, also bspw. die Schnittstelle zwischen einem CAD-Programm und einem CAM-Programm. Die Fertigungsparameter umfassen zumindest teilweise die Parameter Name des Werkstückelementes, Bezugselement, Bezugsfläche, Hauptbezugspunkt, Nebenbezugspunkt, Form, Lage, Fertigungstoleranzen und Oberflächenbeschaffenheit. Diese Parameter sind zu einem Teil durch die übliche Form und den üblichen Ablauf des Konstruierens vorgegeben. Darüber hinaus kann der Name des Werkstückelementes nicht nur zur Bezeichnung und Unterscheidung benutzt werden, sondern der Name des Werkstückelementes enthält auch Informationen über die Bearbeitungsrichtung in Bezug auf ein zugrunde liegendes Koordinatensystem. Somit wird in komprimierter Form ohne die Anzahl der Fertigungsparameter zu vergrößern, Informationen vermittelt.

Betrachtet man das rechnergestützte Konstruieren mit Hilfe eines CAD-Programms, so können die Werkstückelemente vom Benutzer ausgewählt und in einer auf einem Display angezeigten graphischen Darstellung positioniert werden. Anschließend werden die für die Charakterisierung der Fertigungsgeometrie der Werkstückelemente notwendigen Fertigungsparameter als alphanumerische Werte, bspw. über eine Tastatur eingegeben Für jedes Werkstückelement entsteht somit ein Datensatz, der anschließend in vorgegebener Form in einer Tabelle oder in mehreren Tabellen abgespeichert wird. In dieser standardisierten Form können dann die anderen Programme auf die eingegebenen Informationen zurückgreifen, ohne diese aus einer Zeichnung oder Zeichnungsdatei ableiten zu müssen.

Das Festlegen der Fertigungsparameter während des Konstruierens kann auch teilweise automatisch erfolgen, wobei nach einem Auswählen und ersten Positionieren des Werkstückelementes die sich aus der graphischen Darstellung ergebenen Fertigungsparameter erzeugt werden. Anschließend können diese dann durch eine Dateneingabe verändert und/oder ergänzt werden, sofern dieses erforderlich ist.

Obwohl ein Austausch von Zeichnungen in gedruckter Form oder in Form von Zeichnungsdateien nicht erforderlich ist, da das gesamte Werkstück in standardisierter Form durch die Werkstückelemente mit den zugeordneten Fertigungsparametem charakterisiert wird, kann es vorteilhaft sein, eine oder wenige graphische Darstellungen des Werkstückes mit einer Bemaßung für eine Erstbearbeitung zu erzeugen. Die Bemaßung umfasst dabei bspw. die Maße über alle Längen der Abmessungen des Werkstückes und bspw. eine Bemaßung für Indexmarkierungen oder Indexbohrungen, die für eine Werkstückaufnahme und -justierung erforderlich sind. Insofern handelt es sich dann um konventionelle Zeichnungen, die für die erste Bearbeitung zur Vorbereitung der Fertigung des Werkstückes verwendet werden. Die nachfolgende präzise Fertigstellung erfolgt dann mit Hilfe des CAM-Programmes auf der Basis der abgespeicherten alphanumerischen Werte der Fertigungsparameter.

Da die alphanumerischen Daten der Fertigungsparameter die Schnittstelle zwischen den verschiedenen Programmen darstellen, kann das CAD-Programm, das bei einem neuen Konstruieren die Daten zunächst selber erzeugt, auch auf einen bestehenden Satz von alphanumerischen Daten zugreifen, um eine nachträgliche konstruierende Bearbeitung des Werkstückes durchzuführen. Dabei wird aus den alphanumerischen Daten dann mindestens eine graphische Darstellung des Werkstückes erzeugt, so daß dessen Geometrie anhand der graphischen Darstellung überprüft und gegebenenfalls erneut verändert werden kann.

Für ein Herstellen des Werkstückes liest das CAM-Programm die alphanumerischen Daten der Fertigungsparameter ein und steuert anschließend mindestens ein rechnergesteuertes Werkzeug an. Der Bearbeitungsablauf des Werkzeuges wird dann zumindest teilweise mit Hilfe der eingelesenen alphanumerischen Fertigungsparameter gesteuert. Zu einem wesentlichen Teil, wenn nicht vollständig, greift also das CAM-Programm auf die während des rechnergestützten Konstruierens erzeugten alphanumerischen Daten zu, so daß ein separates Erzeugen und Ableiten von Steuerungsparametern für das mindestens eine Werkzeug vermieden wird. Der Zeitaufwand zur Einrichtung des Bearbeitungsablaufes für ein rechnergestütztes Fertigen wird somit erheblich verringert.

Ebenso kann eine rechnergestützte Qualitätsüberprüfung eines fertiggestellten Werkstückes mit Hilfe eines Überprüfungswerkzeuges auf der Basis der abgespeicherten und von einem CIM-Programm eingelesenen alphanumerischen Daten der Fertigungsparameter gesteuert werden. Die Qualitätsüberprüfung findet dann zumindest teilweise mit Hilfe der eingelesenen Daten statt. Auch hier ergibt sich ein Zeitvorteil, da nicht erst in einem separaten Schritt aus vorliegenden Zeichnungen bzw. Zeichnungsdateien die Parameter abgeleitet werden müssen, die für eine Qualitätsüberprüfung erforderlich sind. Wird bei der Qualitätskontrolle festgestellt, daß eine Änderung der Fertigungsparameter notwendig ist, so können diese in geänderter Form als alphanumerische Daten abgespeichert werden, so daß anschließend das CAM-Programm für ein erneutes Herstellen eines Werkstückes auf die nunmehr geänderten Daten zurückgreifen kann. Ebenso kann das CAD-Programm für eine erneute graphische Darstellung und möglicherweise weitere Bearbeitung der Konstruktion des Werkstückes auf die verändert abgespeicherten Daten zurückgreifen.

Das zuvor beschriebene Verfahren zum Konstruieren und/oder zum Fertigstellen und/oder zur Qualitätsüberprüfung eines Werkstückes ist insbesondere für die Erstellung von Prototypen geeignet, da gerade in diesem Stadium häufig Änderungen an den später in Serie gehenden Werkstücken erforderlich sind. Der Zeitaufwand kann durch die standardisierte alphanumerische Schnittstelle zwischen den Programmen erheblich gesenkt werden.

Im folgenden wird die Erfindung anhand eines Ausführungsbeispieles mit Bezug auf die Zeichnung näher erläutert. In der Zeichnung zeigen
- Fig. 1: eine teilweise Seitenansicht eines Werkstückes mit einer Mehrzahl von Werkzeugelementen und
- Fig. 2: eine Tabelle mit den alphanumerischen Werten der Fertigungsparameter eines Teils der in Fig. 1 dargestellten Werkstückelemente.

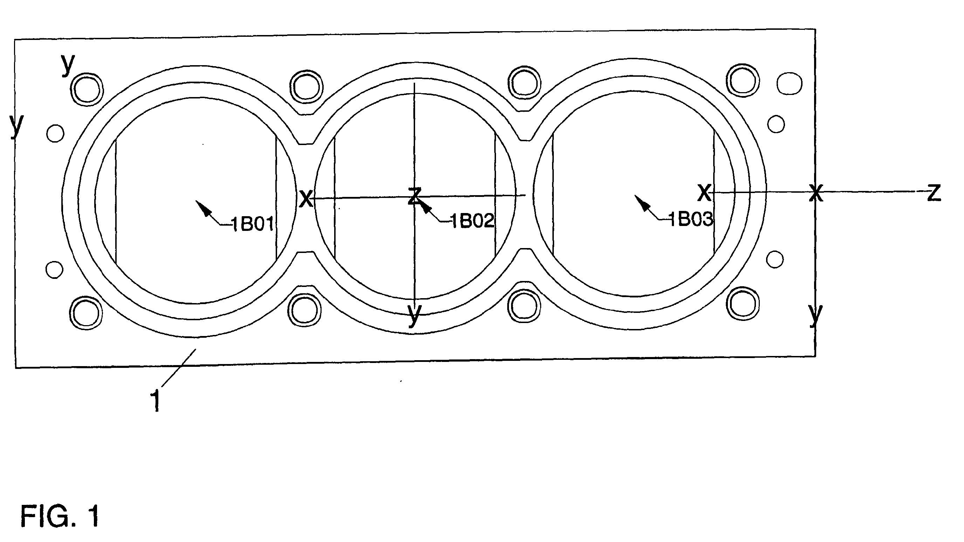

Fig. 1 zeigt einen Ausschnitt einer Seitenansicht eines Drei-Zylinderkurbelgehäuses für einen Motor eines Kraftfahrzeuges. Dabei handelt es sich um eine von sechs möglichen Seitenansichten, wobei die dargestellte Seitenansicht beispielhaft die Nummer "1" trägt. In der Seitenansicht sind eine Mehrzahl von Bohrungen dargestellt, die jeweils mit einem Namen bezeichnet sind. So tragen bspw. die drei Zylinderbohrungen die Namen "1B01", "1 B02" und "1 B03". Da es sich dabei um Bohrungen handelt, die in der Seitenansicht 1, also auf der Seite 1 des Werkstückes befinden, tragen sämtliche Namen der Bohrungen als erstes Zeichen im Namen eine "1". Der Name der Bohrung, also allgemein ausgedrückt der Name des Werkstückelementes enthält eine Information über die Bearbeitungsrichtung in Bezug auf ein zugrundeliegendes Koordinatensystem.

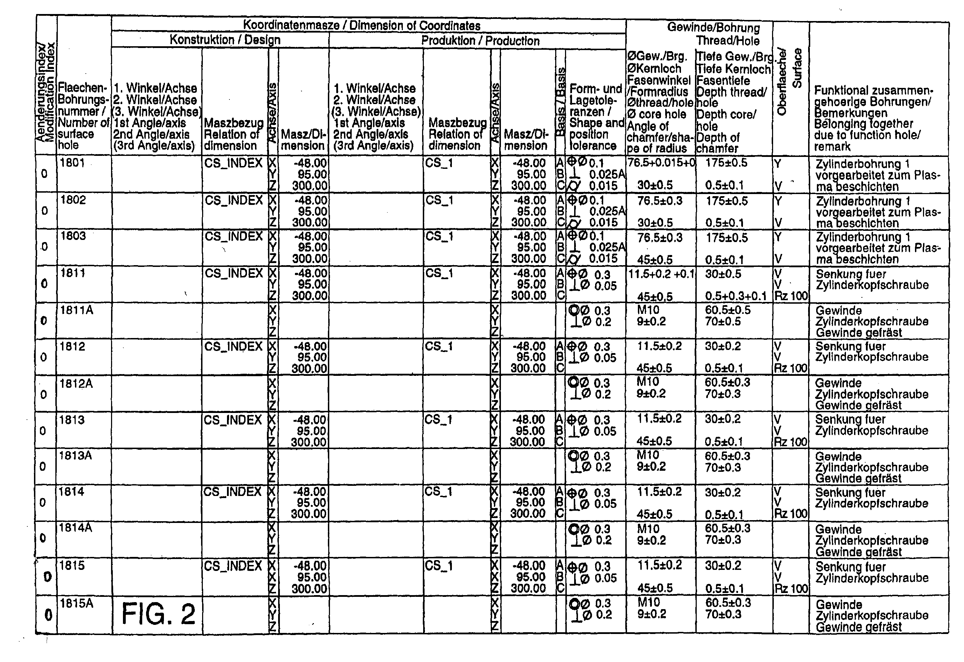

Fig. 2 zeigt eine Tabelle mit den Fertigungsparametem in Form von alphanumerischen Werten, mit denen die in Fig. 1 dargestellten Werkstückelemente, also Bohrungen charakterisiert werden. In Spalte 2 der Tabelle ist der Name des Werkstückelementes angegeben, wobei in den ersten drei Zeilen die bereits erwähnten drei Zylinderbohrungen "1B01", "1B02" und "1B03" angegeben sind. Die nachfolgenden Spalten geben die Fertigungsparameter in Bezug auf ein Koordinatensystem, hier "CS-Index" sowie die Maße in x-, y- und z-Richtung an. Weitere Fertigungsparameter sind die Form- und Lagetoleranzen sowie Fertigungsparameter für die Ausgestaltung der Gewinde bzw. Bohrungen. Dazu gehören Durchmesserangaben sowie Tiefen der Bohrungen sowie Fasenwinkel und Fasentiefe. In einer weiteren Spalte, die zweite Spalte von rechts, werden Fertigungsparameter in Bezug auf die Oberflächenbeschaffenheit angegeben. Die Spalte am rechten Rand der Tabelle in Fig. 2 gibt Angaben über funktionale Zusammenhänge und Bemerkungen an. Zuletzt sei auf die ganz links angeordnete Spalte hingewiesen, in der Informationen in Bezug auf die Anzahl der Änderungen angegeben werden, so daß im Einzelfall nachgehalten wird, wie oft ein bestimmtes Werkstückelement während der Entwicklung eines Prototypens verändert worden ist.

## Patentansprüche

1. Verfahren zum rechnergestützten Konstruieren und zum rechnergestützten Fertigstellen eines Werkstückes,
- bei dem das Werkstück zumindest teilweise aus vordefinierten Werkstückelementen aufgebaut wird,
**dadurch gekennzeichnet, dass**
- die für die Charakterisierung der Fertigungsgeometrie des Werkstückelements bzw. der Werkstückelemente notwendigen Fertigungsparameter als alphanumerische Werte eingegeben werden,
- wobei für jedes Werkstückelement ein Datensatz entsteht, der anschließend in standardisierter Form in einer Tabelle oder in mehreren Tabellen abgespeichert wird,
- die Fertigungsparameter die Parameter Name des Werkstückelements, Bezugselement, Bezugsfläche, Hauptbezugspunkt, Nebenbezugspunkt, Form, Lage, Fertigungstoleranzen und Oberflächenbeschaffenheit umfassen und
- der Name des Werkstückelementes Informationen über die Bearbeitungsrichtung in Bezug auf ein zugrunde liegendes Koordinatensystem enthält.

2. Verfahren nach Anspruch 1, bei dem die Fertigungsparameter als alphanumerische Daten in Form einer Tabelle eingelesen werden.

3. Verfahren nach einem der Ansprüche 1 oder 2, bei dem während des rechnergestützten Konstruierens mittels eines CAD-Programms die Werkstückelemente vom Benutzer ausgewählt und in einer auf einem Display angezeigten graphischen Darstellung positioniert werden.

4. Verfahren nach Anspruch 3, bei dem nach einem Auswählen und ersten Positionieren eines Werkstückelementes die sich aus der graphischen Darstellung ergebenden Fertigungsparameter automatisch erzeugt und vorzugsweise anschließend durch eine Dateneingabe verändert und/oder ergänzt werden.

5. Verfahren nach Anspruch 3 oder 4, bei dem eine graphische Darstellung mit einer Bemaßung für eine Erstbearbeitung des Werkstückes erzeugt wird.

6. Verfahren nach einem der Ansprüche 3 bis 5, bei dem für eine nachträgliche konstruierende Bearbeitung die Fertigungsparameter der Werkstückelemente als alphanumerische Daten eingelesen werden und bei dem mindestens eine graphische Darstellung des Werkstückes erzeugt wird.

7. Verfahren nach einem der Ansprüche 1 bis 6, bei dem für ein Herstellen des Werkstückes mindestens ein rechnergesteuertes Werkzeug mit einem CAM-Programm zum rechnergestützten Fertigen gesteuert wird, wobei der Bearbeitungsablauf des Werkzeugs zumindest teilweise mit Hilfe der eingelesenen alphanumerischen Fertigungsparameter gesteuert wird.

8. Verfahren nach einem der Ansprüche 1 bis 7, bei dem für eine Qualitätsüberprüfung eines fertiggestellten Werkstückes ein Überprüfungswerkzeug mit einem CIM-Programm zur rechnergestützten Qualitätsüberprüfung gesteuert wird, wobei die Qualitätsüberprüfung zumindest teilweise mit Hilfe der eingelesenen alphanumerischen Fertigungsparameter durchgeführt wird.

9. Verfahren nach Anspruch 8, bei dem auf der Basis der bei der Qualitätskontrolle festgestellten Fehler die Fertigungsparameter geändert und erneut abgespeichert werden.

## Claims

1. Method for the computer-aided design and for the computer-aided production of a workpiece
- in which the workpiece is at least partly built up from predefined workpiece elements,
**characterized in that**
- the fabrication parameters needed for the characterization of the fabrication geometry of the workpiece element or the workpiece elements are entered as alphanumeric values,
- for each workpiece element a dataset being produced which is subsequently stored in standardized form in a table or in a plurality of tables,
- the fabrication parameters comprising the parameters name of the workpiece element, reference element, reference area, main reference point, secondary reference point, shape, position, fabrication tolerances and surface finish, and
- the name of the workpiece element containing information about the machining direction in relation to a basic coordinate system.

2. Method according to Claim 1, in which the fabrication parameters are read in as alphanumeric data in the form of a table.

3. Method according to either of Claims 1 and 2, in which, during the computer-aided design by means of a CAD program, the workpiece elements are selected by the user and are positioned in a graphical representation shown on a display.

4. Method according to Claim 3, in which, following selection and first positioning of a workpiece element, the fabrication parameters resulting from the graphical representation are generated automatically and are preferably subsequently changed and/or supplemented by means of a data input.

5. Method according to Claim 3 or 4, in which a graphical representation is produced with dimensioning for first machining of the workpiece.

6. Method according to one of Claims 1 to 3 in which the fabrication parameters for subsequent constructional machining of the workpiece elements are read in as alphanumeric data, and in which at least one graphical representation of the workpiece is produced.

7. Method according to one of Claims 1 to 6, in which, for the production of the workpiece, at least one computer-controlled tool is controlled with a CAM program for computer-aided fabrication, the machining sequence of the tool being at least partly controlled with the aid of the alphanumeric fabrication parameters read in.

8. Method according to one of Claims 1 to 7, in which, for the quality checking of a produced workpiece, a checking tool is controlled with a CIM program for computer-aided quality checking, the quality checking being at least partly carried out with the aid of the alphanumeric fabrication parameters read in.

9. Method according to Claim 8, in which the fabrication parameters are changed on the basis of the defects established during the quality inspection and are stored again.

## Revendications

1. Procédé de conception assistée par ordinateur et de fabrication assistée par ordinateur d'une pièce dans lequel la pièce est construite, au moins partiellement, à partir d'éléments de pièce prédéfinis,
**caractérisé en ce**
**que** les paramètres de fabrication nécessaires à la caractérisation de la géométrie de fabrication de l'élément de pièce ou des éléments de pièce sont saisis sous forme de valeurs alphanumériques,
un jeu de données correspondant à chaque élément de pièce, lequel jeu de données est ensuite mémorisé sous forme standardisée dans un tableau ou dans plusieurs tableaux,
en ce que les paramètres de fabrication comprennent les paramètres Nom de l'élément de pièce, Élément de référence, Surface de référence, Point de référence principal, Point de référence auxiliaire, Forme, Position, Tolérances de fabrication et État de surface et
en ce que le nom de l'élément de pièce comprend des informations sur le sens d'usinage par rapport à un système de coordonnées de base.

2. Procédé selon la revendication 1 pour lequel les paramètres de fabrication sont lus en tant que données alphanumériques sous la forme d'un tableau.

3. Procédé selon la revendication 1 ou 2, pour lequel, au cours de la conception assistée par ordinateur à l'aide d'un programme de CAO, les éléments de pièce sont sélectionnés par l'utilisateur et positionnés dans une représentation graphique affichée sur un écran.

4. Procédé selon la revendication 3, pour lequel, après une sélection et un premier positionnement d'un élément de pièce, les paramètres de fabrication résultant de la représentation graphique sont automatiquement générés et sont, de préférence ensuite, modifiés et/ou complétés par une saisie de données.

5. Procédé selon la revendication 3 ou 4, pour lequel une représentation graphique est générée avec des cotes pour un premier usinage de la pièce.

6. Procédé selon l'une quelconque des revendications 3 à 5, pour lequel, pour un usinage conçu ultérieurement, les paramètres de fabrication des éléments de pièce sont lus sous la forme de données alphanumériques et pour lequel au moins une représentation graphique de la pièce est générée.

7. Procédé selon l'une quelconque des revendications 1 à 6, pour lequel, pour la fabrication de la pièce, au moins un outil piloté par ordinateur est commandé par un programme de FAO pour fabriquer la pièce avec l'assistance de l'ordinateur, le cycle d'usinage de l'outil étant au moins partiellement commandé au moyen des paramètres de fabrication alphanumériques qui ont été lus.

8. Procédé selon l'une quelconque des revendications 1 à 7, pour lequel, pour un contrôle de qualité d'une pièce fabriquée, un outil de contrôle est piloté avec un programme de PIO pour contrôler la qualité de la pièce avec assistance de l'ordinateur, le contrôle de qualité étant effectué au moins partiellement au moyen des paramètres de fabrication alphanumériques qui ont été lus.

9. Procédé selon la revendication 8, pour lequel, sur la base des erreurs détectées lors du contrôle de qualité, les paramètres de fabrication sont modifiés et mémorisés à nouveau.
